# EUROPEAN PATENT SPECIFICATION

(11) **EP 4 386 361 B1**
(45) Date of publication and mention of the grant of the patent: **18.12.2024**
(21) Application number: 23170959.3
(22) Date of filing: 02.05.2023
(51) Int. Cl.: G01N 21/47, G01N 21/84, G01N 21/892, G01N 21/956

(54) **BATTERY CELL APPEARANCE DEFECT DETECTION APPARATUS AND DETECTION DEVICE**
VORRICHTUNG ZUR ERKENNUNG VON DEFEKTEN DES AUSSEHENS VON BATTERIEZELLEN UND DETEKTIONSVORRICHTUNG
APPAREIL DE DÉTECTION DE DÉFAUT D'ASPECT D'ÉLÉMENT DE BATTERIE ET DISPOSITIF DE DÉTECTION

(30) Priority: 13.12.2022 CN 202223328043 U
(43) Date of publication of application: 19.06.2024
(73) Proprietor: Contemporary Amperex Technology (Hong Kong) Limited, Central, Central And Western District (HK)
(72) Inventor: MA, Lin, Ningde City, 352100 (CN); WANG, Pengju, Ningde City, 352100 (CN); HUANG, Yunlong, Ningde City, 352100 (CN); WANG, Zhenhui, Ningde City, 352100 (CN)
(74) Representative: Laufhütte, Dieter

(56) References cited:
- DE-A1- 102017 124 978
- KR-A- 20220 042 848
- KR-B1- 102 357 695
- US-A1- 2022 291 140

## Description

### Technical Field

The present application relates to the field of battery cell detection, and in particular, to a battery cell appearance defect detection apparatus and a detection device having the battery cell appearance defect detection apparatus.

### Background

In the related art, the battery cell is an important part of the lithium battery, in which the outer surface of the case of the battery cell is clad with a separation film, and the requirements for the appearance of the outer separation film of the case of the battery cell are very high, so it is necessary to perform the inspection of appearance defects of the film-clad battery cell.

At present, the appearance defects of the battery cell are detected by detection apparatuses, but the existing detection apparatuses can only detect the defects outside the film of the film-clad battery cell, but cannot detect the defects inside the film of the film-clad battery cell. For example, foreign matter particles and air bubbles inside the film of the film-clad battery cell cannot be detected, and if there are slight pits outside the film of the film-clad battery cell, the pits are not easy to be detected by the detection apparatuses.

KR 102 357 695 B1 relates to a system for inspecting the appearance of an object such as a battery for an electric vehicle.

### Summary

The present application is intended to at least solve one of the technical problems existing in the prior art. For this purpose, one of the objectives of the present application is to propose a battery cell appearance defect detection apparatus, which can accurately detect the defects inside and outside the film of the film-clad battery cell.

The present application further proposes a detection device.

The current invention provides a film-clad battery cell appearance defect detection apparatus according to claim 1.

In the above technical solution, by arranging a first detection assembly, a second detection assembly, and a control assembly, foreign matter particles and air bubbles inside the outer film of the battery cell can be detected, and foreign matter particles or air bubbles can also be accurately distinguished, and pits on the surface of the outer film of the battery cell can also be accurately detected, thereby accurately detecting defects inside and outside the film of the film-clad battery cell.

In the above technical solution, by setting the first light and the second light to be both infrared scanning light, the detection performance of the battery cell appearance defect detection apparatus can be ensured, thereby ensuring that the battery cell appearance defect detection apparatus can accurately detect the defects inside and outside the film of the film-clad battery cell.

In the above technical solution, by setting 800 nm ≤ λ ≤ 900 nm, the wavelength of the first light and the wavelength of the second light can be made to be appropriate, and it can be ensured that the first light can pass through the outer film of the battery cell, and when the second light irradiates the detection surface, it can be ensured that the battery cell appearance defect detection apparatus can accurately detect pits on the surface of the battery cell.

In some embodiments, the first included angle is α, which satisfies the relational expression: 60° ≤ α ≤ 80°.

In the above technical solution, by setting 60° ≤ α ≤ 80°, it is possible to detect foreign matter particles and air bubbles inside the outer film of the battery cell more accurately, and also to distinguish between foreign matter particles and air bubbles.

In some embodiments, the second included angle is β, and 5° ≤ β ≤ 15°.

In the above technical solution, by setting 5° ≤ β ≤ 15° , pits on the surface of the battery cell can be detected more accurately.

In some embodiments, the first image collector is constructed as a line scan camera, and the position on the detection surface irradiated by the scanning line of the first image collector coincides with the position on the detection surface irradiated by the first light.

In the above technical solution, by arranging the position on the detection surface irradiated by the scanning line of the first image collector to coincide with the position on the detection surface irradiated by the first light, the first image collector can accurately collect the first image of the position of the battery cell irradiated by the first light, and the control assembly can accurately determine the foreign matter particles and air bubbles inside the outer film of the battery cell according to the first image.

In some embodiments, the second image collector is constructed as a line scan camera, and the position on the detection surface irradiated by the scanning line of the second image collector coincides with the position on the detection surface irradiated by the second light.

In the above technical solution, by arranging the position on the detection surface irradiated by the scanning line of the second image collector to coincide with the position on the detection surface irradiated by the second light, the second image collector can accurately collect the second image of the position of the battery cell irradiated by the second light, and the control assembly can accurately determine whether pits exist on the surface of the battery cell according to the second image.

In some embodiments, the first detection assembly and the second detection assembly are located on the same side of the detection surface.

In the above technical solution, when the battery cell appearance defect detection apparatus detects appearance defects of the battery cell, the first detection assembly and the second detection assembly are located on the same side of the detection surface, which facilitates the arrangement of the battery cell appearance defect detection apparatus and can simplify the structure of the battery cell appearance defect detection apparatus.

In some embodiments, a first light region on the detection surface irradiated by the first light is misaligned with a second light region on the detection surface irradiated by the second light.

In the above technical solution, by arranging the first light region on the detection surface irradiated by the first light to be misaligned with the second light region on the detection surface irradiated by the second light, it is possible to avoid the coinciding of the first light region on the detection surface irradiated by the first light and the second light region on the detection surface irradiated by the second light, and to prevent the first detection assembly and the second detection assembly from interfering with each other, thereby improving the detection accuracy of the battery cell appearance defect detection apparatus.

In some embodiments, along a direction perpendicular to the detection surface, the spacing distance between a light source light-emitting surface of the first light source and the detection surface is D1, and the spacing distance between a light source light-emitting surface of the second light source and the detection surface is D2, which satisfy the relational expression: D2 < D1.

In the above technical solution, by setting D2 < D1, it is possible to make the first light source to be misaligned with the second light source, thus avoiding mutual interference between the first light source and the second light source.

In some embodiments, the first light source and the second light source respectively emit light from different directions to the detection surface.

In the above technical solution, by setting the first light source and the second light source to emit light from different directions to the detection surface, it is possible to avoid coinciding of the first light and the second light.

In some embodiments, along a direction perpendicular to the detection surface, the spacing distance between a light source light-emitting surface of the first light source and the detection surface is D1, which satisfies the relational expression: 0mm < D1 < 150mm; and/or
along a direction perpendicular to the detection surface, the spacing distance between a light source light-emitting surface of the second light source and the detection surface is D2, which satisfies the relational expression: 0mm < D2 < 150mm.

In the above technical solution, by setting 0mm < D1 < 150mm, it is possible to make the spacing distance between the light source light-emitting surface of the first light source and the detection surface to be appropriate, which can ensure that the first light can pass through the outer film of the battery cell, and by setting 0mm < D2 < 150mm, the accurate detection of pits on the surface of the battery cell can be ensured, thereby improving the precision of detection of the battery cell appearance defect detection apparatus.

In some embodiments, 40mm ≤ D1 ≤ 80mm.

In the above technical solution, by setting 40mm ≤ D1 ≤ 80mm, it is possible to make the spacing distance between the light source light-emitting surface of the first light source and the detection surface to be more appropriate, which can ensure that the first light can pass through the outer film of the battery cell, and ensuring that the battery cell appearance film of the battery cell.

In some embodiments, 10mm ≤ D2 ≤ 50mm.

In the above technical solution, by setting 10mm ≤ D2 ≤ 50mm, pits on the surface of the battery cell can be detected more accurately, thus further improving the precision of detection of the battery cell appearance defect detection apparatus.

In some embodiments, the battery cell appearance defect detection apparatus is suitable for appearance detection of the battery cell that is moving.

In the above technical solution, the appearance detection of the battery cell that is moving by the battery cell appearance defect detection apparatus can complete the detection of appearance defects of the battery cell during the movement of the battery cell, which enhances the speed of detection and can improve the efficiency of detection of the battery cell.

In some embodiments, a first light region on the detection surface irradiated by the first light is parallel to a second light region on the detection surface irradiated by the second light.

In the above technical solution, by arranging the first light region on the detection surface irradiated by the first light to be parallel to the second light region on the detection surface irradiated by the second light, it is possible to avoid the intersection of the first light region on the detection surface irradiated by the first light and the second light region on the detection surface irradiated by the second light, and to ensure respective detection performance of the first detection assembly and the second detection assembly, thereby improving the detection accuracy of the battery cell appearance defect detection apparatus.

In some embodiments, along the direction of extension of a first light region on the detection surface irradiated by the first light, the width of the detection surface is L1 and the length of the first light region is L2, which satisfy the relational expression: L1 ≤ L2.

In the above technical solution, by setting L1 ≤ L2, it is ensured that the first light can scan the entire detection surface during the movement of the battery cell, thus avoiding the occurrence of a missed detection of a certain region of the detection surface.

In some embodiments, along the direction of extension of a second light region on the detection surface irradiated by the second light, the width of the detection surface is L3 and the length of the second light region is L4, which satisfy the relational expression: L3 ≤ L4.

In the above technical solution, by setting L3 ≤ L4, it is ensured that the second light can scan the entire detection surface, thus avoiding the occurrence of a missed detection of a certain region of the detection surface.

In some embodiments, the first image collector and/or the second image collector are/is constructed as a line scan camera, and the gray scale value of an image generated through collection by the line scan camera is 80-100.

In the above technical solution, by setting the gray scale value of the image generated through collection by the line scan camera to be in 80-100, the contrast of the image can be made appropriate, so that the characteristic defects inside and outside the film of the film-clad battery cell are obvious.

In some embodiments, the battery cell appearance defect detection apparatus further comprises: an angle detection apparatus for detecting an included angle between the first light and the detection surface and an included angle between the second light and the detection surface.

In the above technical solution, by providing the angle detection apparatus, the included angle between the first light and the detection surface and the included angle between the second light and the detection surface can be detected, thus facilitating the determination of whether the second included angle is less than the first included angle.

In some embodiments, the control assembly is communicatively connected to both the first light source and the second light source, and the control assembly is used to control the turning on or off of the first light source, the second light source, the first image collector, and the second image collector.

In the above technical solution, by communicatively connecting the control assembly to both the first light source and the second light source, the control assembly controls the first light source, the second light source, the first image collector, and the second image collector to turn on when it is necessary to detect appearance defects of the battery cell, and controls the first light source, the second light source, the first image collector, and the second image collector to turn off when it is not necessary to detect appearance defects of the battery cell, thus avoiding waste of electricity by the battery cell appearance defect detection apparatus.

In a second aspect, embodiments of the present application further provide a detection device comprising a battery cell appearance defect detection apparatus mentioned above.

In the above technical solution, there are a plurality of said battery cell appearance defect detection apparatuses, the plurality of said battery cell appearance defect detection apparatuses being used for correspondingly detecting a plurality of said detection surfaces of the battery cell.

In the above technical solution, by means of a plurality of said battery cell appearance defect detection apparatuses correspondingly detecting a plurality of said detection surfaces of the battery cell, the efficiency of detection of appearance defects of the battery cell can be improved.

Additional aspects and advantages of the present application will be given in part in the following description, and will become apparent in part from the following description, or be learned through the practice of the present application.

### Description of Drawings

The above and/or additional aspects and advantages of the present application will become apparent and easily understood from the description of the embodiments in conjunction with the following accompanying drawings, in which:
Fig. 1 is a schematic diagram of a battery cell appearance defect detection apparatus according to an embodiment of the present application;
Fig. 2 is a main view of the battery cell appearance defect detection apparatus according to an embodiment of the present application; and
Fig. 3 is a schematic diagram of a battery cell, a first light region, and a second light region according to an embodiment of the present application.

Reference numerals:
battery cell appearance defect detection apparatus 100;
first detection assembly 10; first image collector 11; first light source 12; first light 13; first included angle α; first light region 14;
second detection assembly 20; second image collector 21; second light source 22; second light 23; second included angle β; second light region 15;
battery cell 200; detection surface 201.

### Detailed Description

Embodiments of the present application are described in detail below, and examples of the embodiments are shown in the accompanying drawings, wherein the same or similar reference numerals throughout indicate the same or similar components or components having the same or similar functions. The embodiments described below by reference to the accompanying drawings are exemplary and are intended to explain the present application only and are not to be construed as limiting the present application.

To make the objective, technical solutions and advantages of the embodiments of the present application more clear, the technical solutions in the embodiments of the present application will be clearly described below with reference to the drawings in the embodiments of the present application. Obviously, the embodiments described are some of rather than all of the embodiments of the present application. Based on the embodiments in the present application, all other embodiments obtained by those of ordinary skill in the art without creative effort fall within the protection scope of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "comprising" and "having" and any variations thereof in the specification and the claims of the present application as well as the foregoing description of the drawings are intended to cover non-exclusive inclusions. The terms "first", "second", etc., in the specification and claims of the present application or in the accompanying drawings above are used to distinguish between different objects and are not intended to describe a particular order or relationship of precedence.

Reference to "an embodiment" in the present application means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting", "connecting", "connection" and "attachment" should be understood in a broad sense, unless otherwise explicitly specified or defined. For example, it may be a fixed connection, a detachable connection, or an integrated connection; and it may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relationship for describing associated objects, indicating that three relationships may exist. For example, A and/or B may represent three situations: A exists alone, both A and B exist, and B exists alone. In addition, the character "/" in the present application generally means that the associated objects before and after it are in an "or" relationship.

In the embodiments of the present application, the same reference numerals indicate the same parts and, for the sake of brevity, the detailed description of the same parts is omitted in the different embodiments. It should be understood that the dimensions such as the thickness, length, and width of various components in the embodiments of the present application shown in the accompanying drawings, as well as the dimensions such as the overall thickness, length, and width of the integrated apparatus are illustrative only and shall not constitute any limitation on the present application.

In the present application, battery cell 200 may comprise a lithium-ion secondary battery, a lithium-ion primary battery, a lithium-sulfur battery, a sodium/lithium-ion battery, a sodium-ion battery, a magnesium-ion battery, or the like, which is not limited in the embodiments of the present application. The battery cell 200 may be cylindrical, flat, rectangular, or in other shapes, which is also not limited in the embodiments of the present application. The battery cell 200 is generally divided into three types according to encapsulating manners: cylindrical battery cells, rectangular battery cells, and pouch cells, which are not limited in the embodiments of the present application.

The battery cell 200 comprises a shell, an electrode assembly, and an electrolyte solution, and the shell is used to accommodate the electrode assembly and the electrolyte solution. The electrode assembly consists of a positive electrode sheet, a negative electrode sheet, and a separator. The battery cell 200 operates mainly relying on movement of metal ions between the positive electrode sheet and the negative electrode sheet. The positive electrode sheet comprises a positive electrode current collector and a positive electrode active material layer, wherein the positive electrode active material layer is coated on a surface of the positive electrode current collector, the part of the positive electrode current collector not coated with the positive electrode active material layer protrudes from the part of the positive electrode current collector already coated with the positive electrode active material layer, and the part of the positive electrode current collector not coated with the positive electrode active material layer serves as a positive electrode tab. Taking a lithium-ion battery as an example, the material of the positive electrode current collector may be aluminum, and the positive electrode active material may be lithium cobalt oxide, lithium iron phosphate, ternary lithium, lithium manganate, or the like. The negative electrode sheet comprises a negative electrode current collector and a negative electrode active material layer, wherein the negative electrode active material layer is coated on a surface of the negative electrode current collector, the part of the negative electrode current collector not coated with the negative electrode active material layer protrudes from the part of the negative electrode current collector already coated with the negative electrode active material layer, and the part of the negative electrode current collector not coated with the negative electrode active material layer serves as a negative electrode tab. The material of the negative electrode current collector may be copper, and the negative electrode active material may be carbon, silicon, or the like. In order to ensure that no fusing occurs when a large current passes, there are a plurality of positive electrode tabs which are laminated together, and there are a plurality of negative electrode tabs which are laminated together.

The separator may be made from polypropylene (PP), polyethylene (PE), or the like. In addition, the electrode assembly may be of a wound structure or a laminated structure, which is not limited in the embodiments of the present application.

The inventor found that there is a separation film bonded on the outer surface of the shell of the battery cell, and during the production and detection of the battery cell, the appearance defects of the battery cell are inspected by a detection apparatus, but the existing detection apparatuses can only detect defects on the outer surface of the separation film, but not defects inside the film of the film-clad battery cell. In other words, defects between the separation film and the shell of the battery cell cannot be detected. For example, foreign matter particles and air bubbles between the separation film and the shell of the battery cell cannot be detected. Moreover, if there are slight pits on the surface of the battery cell, it is not easy for the pits to be detected by the existing detection apparatuses.

In addition, the existing battery cell appearance defect inspection identifies appearance defects of a battery cell by means of manual visual inspection and manual touch, so the speed of detection of the existing way of detecting appearance defects of the battery cell is low, resulting in low efficiency of detection; if there are foreign matter particles inside the separation film, the manual touch may lead to the breakage of the separation film, thus causing secondary damage to the battery cell; and at the same time, if there are slight pits on the surface of the battery cell, it is not easy for the pits to be detected.

Based on the above considerations, in order to solve the problem of accurately detecting appearance defects of the battery cell 200, the inventor, after research, has designed a battery cell appearance defect detection apparatus 100. The battery cell appearance defect detection apparatus 100, by arranging a first detection assembly 10, a second detection assembly 20, and a control assembly, can detect foreign matter particles and air bubbles inside the outer film of the battery cell 200, and can also accurately distinguish between foreign matter particles and air bubbles, and can also accurately detect pits on the surface of the outer film of the battery cell 200, thereby accurately detecting defects inside and outside the film of the film-clad battery cell 200. Moreover, compared with the manual inspection approach, using the battery cell appearance defect detection apparatus 100 of the present application to detect the battery cell 200, it is possible to enhance the speed of detection, improve the efficiency of detection, and avoid causing secondary damage to the battery cell 200, and at the same time, slight pits existing on the outer surface of the film of the battery cell 200 can be accurately detected.

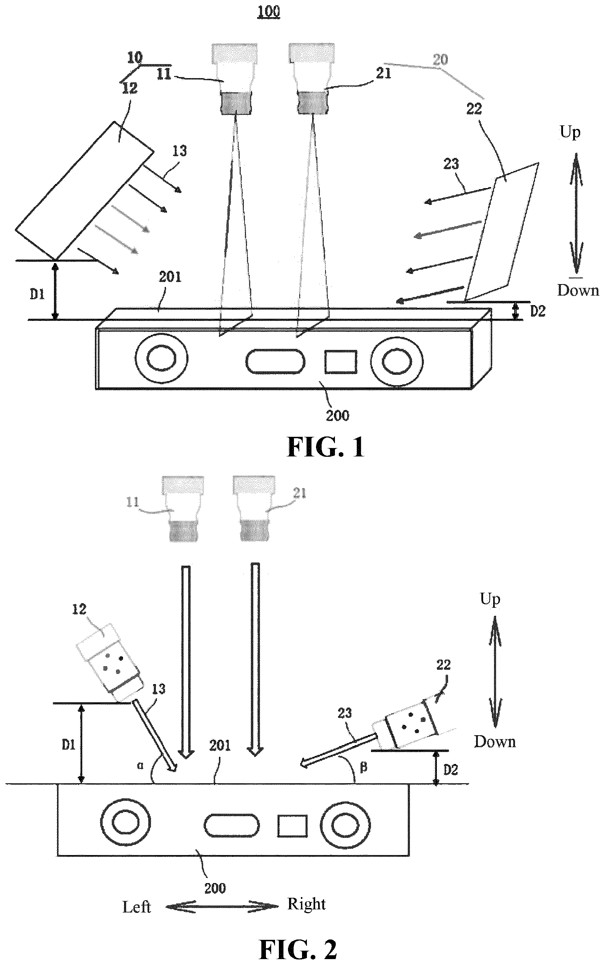

The battery cell appearance defect detection apparatus 100 according to embodiments of the present application will be described with reference to Figs. 1-3. The present application is illustrated taking the direction of arrangement of the battery cell 200 and the battery cell appearance defect detection apparatus 100 in Figs. 1 and 2 as an example. The battery cell appearance defect detection apparatus 100 comprises a first detection assembly 10, a second detection assembly 20, and a control assembly. The first detection assembly 10 comprises a first image collector 11 and a first light source 12, wherein the first light source 12 is used to emit first light 13 toward a detection surface 201 of a battery cell 200, the detection surface 201 being the surface of the battery cell 200 that needs to be detected. The first light 13 is adapted to pass through the outer film of the battery cell 200 (i.e., the separation film in the above embodiment, which may also be a blue film on the outer surface of the case of the battery cell 200), and the first light 13 forms a first included angle α with the detection surface 201, and the first image collector 11 is used to collect a first image of a position of the battery cell 200 irradiated by the first light 13.

The second detection assembly 20 comprises a second image collector 21 and a second light source 22, wherein the second light source 22 is used to emit second light 23 toward the detection surface 201, the second light 23 forming a second included angle with the detection surface 201, and the second image collector 21 is used to collect a second image of a position of the battery cell 200 irradiated by the second light 23, with the second included angle β being less than the first included angle α. The control assembly may be an industrial personal computer, and the control assembly is connected respectively to the first image collector 11 and the second image collector 21, or it can be understood that the control assembly is communicatively connected to both the first image collector 11 and the second image collector 21, and the control assembly is constructed to detect appearance defects of the battery cell 200 according to the first image and the second image. The appearance defects of the film-clad battery cell 200 comprise defects between the outer film and the shell of the battery cell 200 and defects on the outer film, and it is to be noted that the defects between the outer film and the shell of the battery cell 200 may include defects such as foreign matter, air bubbles, etc., between the outer film and the shell of the battery cell 200, and the defects on the outer film may include defects such as pits on the outer film, matter on the outer film, damages on the outer film, scratches on the outer film, etc. The present application is illustrated by taking the detection of foreign matter and air bubbles between the outer film and the shell of the battery cell 200 as well as pits on the outer film as an example.

Here, the battery cell appearance defect detection apparatus 100 of the present application can perform detection of appearance defects of a moving film-clad battery cell 200, and the battery cell appearance defect detection apparatus 100 can also perform detection of appearance defects of an unmoving film-clad battery cell 200, and the present application is illustrated taking an example where the battery cell appearance defect detection apparatus 100 performs detection of appearance defects of a moving film-clad battery cell 200.

Specifically, when the film-clad battery cell 200 flows past the battery cell appearance defect detection apparatus 100, the first image collector 11, the first light source 12, the second image collector 21, and the second light source 22 are turned on for operation, wherein the first light source 12 emits first light 13 toward the detection surface 201 of the battery cell 200, the first light 13 passing through the outer film of the battery cell 200 and the first light 13 forming a first included angle α with the detection surface 201, and the first image collector 11 performs image scanning to collect a first image of a position of the battery cell 200 that is irradiated by the first light 13. At the end of the scanning, under the action of the first light 13, at the position with foreign matter particles, because the first light 13 cannot pass through the foreign matter particles, the first image appears dark in the middle and bright around, so that the specific position of the foreign matter particles can be located; while at the position without foreign matter but with air bubbles, the first image appears brighter, so that the specific position of the air bubbles can be located; while in the area without foreign matter particles or air bubbles, the first image appears dark in color. The first image collector 11 transmits the collected first image to the control assembly, and a pre-tuned AI algorithm in the control assembly detects whether there are foreign matter particles and air bubbles inside the film of the battery cell 200, and the AI algorithm distinguishes between the air bubbles inside the film and the foreign matter inside the film based on different forms.

In addition, the second light source 22 emits second light 23 toward the detection surface 201 of the battery cell 200, the second light 23 forming a second included angle β with the detection surface 201 to detect pits on the surface of the battery cell 200 in a manner that mimics tilted observation by the human eye, and the second image collector 21 performs image scanning to collect a second image of a position of the battery cell 200 that is irradiated by the second light 23. At the end of the scanning, under the action of the second light 23, positions with and without pits will show distinctly different features on the second image. After the second image collector 21 transmits the collected second image to the control assembly, the pre-tuned AI algorithm in the control assembly detects whether there are pits on the outer surface of the film of the film-clad battery cell 200.

In the above technical solution, by arranging the first detection assembly 10, the second detection assembly 20, and the control assembly, it is possible to detect appearance defects of the film-clad battery cell 200 during the movement of the battery cell 200, and by detecting the appearance of the battery cell 200 in such a contactless and non-stop manner, it is possible to improve the efficiency of detection without causing secondary damage to the battery cell 200 due to manual contact. Moreover, by making the second included angle β to be smaller than the first included angle α, the battery cell appearance defect detection apparatus 100 not only can accurately detect whether there are foreign matter particles and bubbles inside the outer film of the battery cell 200, but also can accurately distinguish between foreign matter particles and air bubbles, and also can accurately detect pits on the outer surface of the film of the battery cell 200, and also can detect slight pits on the outer surface of the film of the battery cell 200, thereby accurately detecting defects inside and outside the film of the film-clad battery cell 200. Moreover, the battery cell appearance defect detection apparatus 100 of the present application is highly automated and simple to operate.

In some embodiments, as shown in Fig. 2, the first included angle is α, which satisfies the relational expression: 60°≤α≤80°. For example, the first included angle α is 60°, 70°, 80° and other values, but the present application is not limited in this regard, and the specific value of the first included angle α can be reasonably selected and set according to the actual situation. By setting 60°≤α≤80°, it is possible to make the angle between the first light 13 and the detection surface 201 appropriate, and to ensure that the first image collector 11 can collect a clear first image after the first light 13 irradiates the detection surface 201. After receiving the first image, the control assembly can more accurately detect whether there are foreign matter particles and air bubbles between the shell and the outer film of the battery cell 200 (i.e., on the inner side of the film), and, when there are foreign matter particles and air bubbles on the inner side of the outer film of the battery cell 200, the foreign matter particles and air bubbles can be accurately distinguished from each other, and the position of the foreign matter particles and the position of the air bubbles can also be accurately located.

In some embodiments, as shown in Fig. 2, the second included angle is β, 5°≤β≤15°. For example, the second included angle β is 5°, 10°, 15° and other values, but the present application is not limited in this regard, and the specific value of the second included angle β can be reasonably selected and set according to the actual situation. By setting 5°≤β≤15°, it is possible to make the angle between the second light 23 and the detection surface 201 appropriate, and to ensure that the second image collector 21 can collect a clear second image after the second light 23 irradiates the detection surface 201. After receiving the second image, the control assembly can more accurately detect whether there are pits on the outer surface of the film of the film-clad battery cell 200, and, when there are pits on the outer surface of the film of the battery cell 200, the position of the pits can be accurately located.

In some embodiments, the control assembly is communicatively connected to both the first light source 12 and the second light source 22, and the control assembly is used to control the turning on or off of the first light source 12, the second light source 22, the first image collector 11, and the second image collector 21. Here, by communicatively connecting the control assembly to both the first light source 12 and the second light source 22, the control assembly controls the first light source 12, the second light source 22, the first image collector 11, and the second image collector 21 to turn on when it is necessary to detect appearance defects of the battery cell 200, and controls the first light source 12, the second light source 22, the first image collector 11, and the second image collector 21 to turn off when it is not necessary to detect appearance defects of the battery cell 200, thus avoiding waste of electricity by the battery cell appearance defect detection apparatus 100.

According to the invention, as shown in Fig. 2, the first light 13 and the second light 23 are both infrared scanning light. Among them, both the first light source 12 and the second light source 22 are set as infrared light sources, and the light emitted from the infrared light sources is infrared scanning light. By setting both the first light 13 and the second light 23 to be infrared scanning light, the first light 13 can pass through the outer film of the battery cell 200, the detection performance of the battery cell appearance defect detection apparatus 100 can be ensured, thereby ensuring that the battery cell appearance defect detection apparatus 100 can accurately detect the defects on the inner side of the film and outside the film of the film-clad battery cell 200. Moreover, for foreign matter particles inside the film with a height of 0.05 mm or less, the first image collector 11 can collect a clear first image by scanning with infrared scanning light, so that the position of foreign objects can be clearly located.

According to the invention, the wavelength of the first light 13 and the wavelength of the second light 23 are both satisfy the relational expression: 800 nm ≤ λ ≤ 900 nm, for example, λ is 800 nm, 850 nm, 900 nm, and other values. By setting 800 nm ≤ λ ≤ 900 nm, it is possible to make the wavelength of the first light 13 and/or the wavelength of the second light 23 appropriate, and to ensure that the first light 13 can pass through the outer film of the battery cell 200, and ensure that the first image collector 11 can collect a clear first image. After receiving the first image, the control assembly can more accurately detect whether there are foreign matter particles and air bubbles on the inner side of the outer film of the film-clad battery cell 200, and, when there are foreign matter particles and air bubbles on the inner side of the outer film of the battery cell 200, the foreign matter particles and air bubbles can be accurately distinguished from each other, and the position of the foreign matter particles and the position of the air bubbles can also be accurately located. In addition, it is possible to ensure that the second image collector 21 can collect a clear second image after the second light 23 irradiates the detection surface 201. After receiving the second image, the control assembly can more accurately detect whether there are pits on the outer film of the film-clad battery cell 200, and, when there are pits on the outer surface of the film of the battery cell 200, the position of the pits can be accurately located, thus ensuring that the battery cell appearance defect detection apparatus 100 can accurately detect the pits on the outer surface of the film of the battery cell 200.

In some embodiments, the first image collector 11 is constructed as a line scan camera, for example, the first image collector 11 is constructed as a 2D line scan camera, a position on the detection surface 201 irradiated by a scanning line of the first image collector 11 coinciding with a position on the detection surface 201 irradiated by the first light 13. Here, by arranging the position on the detection surface 201 irradiated by the scanning line of the first image collector 11 to coincide with the position on the detection surface 201 irradiated by the first light 13, the first image collector 11 can accurately collect the first image of the position of the battery cell 200 irradiated by the first light 13, and the control assembly can accurately determine the foreign matter particles and the air bubbles on the inner side of the outer film of the battery cell 200 according to the first image, and when there are foreign matter particles and air bubbles on the inner side of the outer film of the battery cell 200, they can be accurately detected by the battery cell appearance defect detection apparatus 100. Moreover, by arranging the first image collector 11 as a line scan camera, it can be ensured that the first image collector 11 can perform image scanning on the battery cell 200 that is moving, thereby realizing the effect that the battery cell appearance defect detection apparatus 100 can perform appearance detection of the battery cell 200 that is moving.

In some embodiments, the second image collector 21 is constructed as a line scan camera, for example, the second image collector 21 is constructed as a 2D line scan camera, a position on the detection surface 201 irradiated by a scanning line of the second image collector 21 coinciding with a position on the detection surface 201 irradiated by the second light 23. By arranging the position on the detection surface 201 irradiated by the scanning line of the second image collector 21 to coincide with the position on the detection surface 201 irradiated by the second light 23, the second image collector 21 can accurately collect the second image of the position of the battery cell 200 irradiated by the second light 23, and the control assembly can accurately determine whether there are pits on the outer surface of the film of the battery cell 200 according to the second image; and when there are pits on the outer surface of the film of the battery cell 200, the pits can be accurately detected by the battery cell appearance defect detection apparatus 100. Moreover, by arranging the second image collector 21 as a line scan camera, it can be ensured that the second image collector 21 can perform image scanning on the battery cell 200 that is moving, thereby realizing the effect that the battery cell appearance defect detection apparatus 100 can perform the appearance detection of the battery cell 200 that is moving.

In some embodiments, as shown in Fig. 2, the first detection assembly 10 and the second detection assembly 20 are located on the same side of the detection surface 201. Here, as shown in Fig. 2, the battery cell 200 is illustrated with the direction of arrangement in Fig. 2 as an example. When the upper surface of the battery cell 200 is the detection surface 201, the first detection assembly 10 and the second detection assembly 20 are located over the upper side of the detection surface 201, the first light source 12, the second light source 22, the first image collector 11, and the second image collector 21 are all opposite and spaced apart from the detection surface 201, and the scanning line of the first image collector 11 and the scanning line of the second image collector 21 can both be perpendicular to the detection surface 201. When the battery cell appearance defect detection apparatus 100 detects appearance defects of the battery cell 200, the first detection assembly 10 and the second detection assembly 20 are located on the same side of the detection surface 201, which facilitates the arrangement of the battery cell appearance defect detection apparatus 100 and can simplify the structure of the battery cell appearance defect detection apparatus 100. Moreover, this is also convenient for the first light 13 of the first light source 12 and the second light 23 of the second light source 22 to irradiate the detection surface 201, and is also convenient for the scanning line of the first image collector 11 and the scanning line of the second image collector 21 to irradiate the detection surface 201.

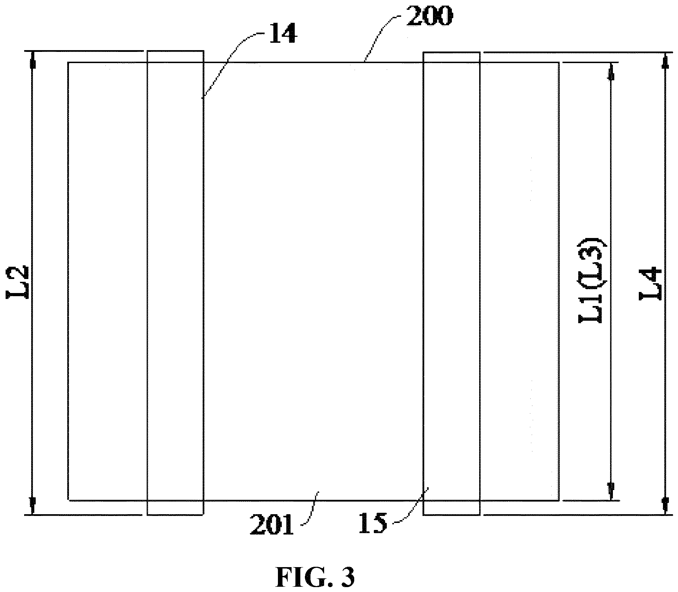

In some embodiments, as shown in Figs. 2 and 3, along the direction of movement of the battery cell 200, a first light region 14 on the detection surface 201 irradiated by the first light 13 is misaligned with a second light region 15 on the detection surface 201 irradiated by the second light 23. Here, as shown in Fig. 2, an illustration is provided taking the movement of the battery cell 200 along the left and right direction in Fig. 2 as an example. When detecting appearance defects of the battery cell 200, the battery cell 200 moves along the left and right direction in Fig. 2, and the first light region 14 on the detection surface 201 irradiated by the first light 13 is misaligned with the second light region 15 on the detection surface 201 irradiated by the second light 23. By arranging the first light region 14 on the detection surface 201 irradiated by the first light 13 to be misaligned with the second light region 15 on the detection surface 201 irradiated by the second light 23, it is possible to avoid the coinciding of the first light region 14 on the detection surface 201 irradiated by the first light 13 and the second light region 15 on the detection surface 201 irradiated by the second light 23, and it is possible to prevent the first detection assembly 10 and the second detection assembly 20 from interfering with each other, thereby improving the detection accuracy of the battery cell appearance defect detection apparatus 100.

In some embodiments, as shown in Fig. 2, the first light source 12 and the second light source 22 emit light from different directions to the detection surface 201, so that it is possible to avoid coinciding of the first light 13 and the second light 23. Further, as shown in Fig. 2, along the direction of movement of the battery cell 200, the first light source 12 is disposed near the left side of the battery cell 200, the second light source 22 is disposed near the right side of the battery cell 200, the first light source 12 is inclined toward the right side of the battery cell 200 to emit the first light 13 toward the detection surface 201, and the second light source 22 is inclined toward the left side of the battery cell 200 to emit the second light 23 toward the detection surface 201, which is convenient for the first light 13 and second light 23 to irradiate the detection surface 201 of the battery cell 200.

In some embodiments, as shown in Fig. 2, along the direction perpendicular to the detection surface 201, the vertical spacing distance between the light source light-emitting surface of the first light source 12 and the detection surface 201 is D1, and the vertical spacing distance between the light source light-emitting surface of the second light source 22 and the detection surface 201 is D2, which satisfy the relational expression: D2 < D1. It is to be noted that when the battery cell appearance defect detection apparatus 100 and the battery cell 200 are placed in the direction as shown in Fig. 2, the vertical spacing distance between the lowermost end of the light source light-emitting surface of the first light source 12 and the detection surface 201 is D1, and the vertical spacing distance between the lowermost end of the light source light-emitting surface of the second light source 22 and the detection surface 201 is D2. Here, as shown in Fig. 2, along the up and down direction, if the spacing distance between the light source light-emitting surface of the first light source 12 and the detection surface 201 is equal to the spacing distance between the light source light-emitting surface of the second light source 22 and the detection surface 201, when the first light source 12 is inclined toward the right side of the battery cell 200 to emit the first light 13 toward the detection surface 201 and the second light source 22 is inclined toward the left side of the battery cell 200 to emit the second light 23 toward the detection surface 201, in the case where the first included angle α and the second included angle β are of certain angles, there is a risk of intersection between the first light 13 and the second light 23.

Therefore, by arranging the spacing distance between the light source light-emitting surface of the first light source 12 and the detection surface 201 to be smaller than the spacing distance between the light source light-emitting surface of the second light source 22 and the detection surface 201, the first light source 12 and the second light source 22 can be made misaligned, thus avoiding interference between the first light source 12 and the second light source 22 and avoiding intersection of the first light 13 with the second light 23, which is conducive to making the region on the detection surface 201 irradiated by the first light 13 to be misaligned with the region on the detection surface 201 irradiated by the second light 23.

In some embodiments, as shown in Fig. 2, along the direction perpendicular to the detection surface 201, the spacing distance between the light source light-emitting surface of the first light source 12 and the detection surface 201 is D1, which satisfies the relational expression: 0mm < D1 < 150mm, for example, D1 is 20mm, 30mm, 90mm, 100mm and other values, but the present application is not limited in this regard, and the spacing distance between the light source light-emitting surface of the first light source 12 and the detection surface 201 is reasonably selected and set according to the actual situation; and/or along the direction perpendicular to the detection surface 201, the spacing distance between the light source light-emitting surface of the second light source 22 and the detection surface 201 is D2, which satisfies the relational expression: 0mm < D2 < 150mm, for example, D2 is 5mm, 90mm, 100mm and other values, but the present application is not limited in this regard, and the spacing distance between the light source light-emitting surface of the second light source 22 and the detection surface 201 is reasonably selected and set according to the actual situation. By setting 0mm < D1 < 150mm, it is possible to make the spacing distance between the light source light-emitting surface of the first light source 12 and the detection surface 201 to be appropriate, which can ensure that the first light 13 can pass through the outer film of the battery cell 200, and by setting 0mm < D2 < 150mm, the accurate detection of the pits on the outer surface of the film of the battery cell 200 by the battery cell appearance defect detection apparatus 100 can be ensured, thereby improving the precision of detection of the battery cell appearance defect detection apparatus 100.

In some embodiments, 40mm < D1 < 80mm, for example, D1 is 40mm, 50mm, 60mm, 80mm and other values, but the present application is not limited in this regard, and the spacing distance between the light source light-emitting surface of the first light source 12 and the detection surface 201 is reasonably selected and set according to the actual situation. By setting 40mm ≤ D1 ≤ 80mm, it is possible to make the spacing distance between the light source light-emitting surface of the first light source 12 and the detection surface 201 to be more appropriate, which can ensure that the first light 13 can pass through the outer film of the battery cell 200, thus enabling the first image collector 11 to collect a clearer first image, and ensuring that the battery cell appearance defect detection apparatus 100 can detect foreign matter particles and air bubbles inside the outer film of the battery cell 200.

In some embodiments, 10mm < D2 < 50mm, for example, D2 is 10mm, 20mm, 30mm, 50mm and other values, but the present application is not limited in this regard, and the spacing distance between the light source light-emitting surface of the second light source 22 and the detection surface 201 is reasonably selected and set according to the actual situation. By setting 10mm ≤ D2 ≤ 50mm, the second image collector 21 can enabled to collect a clearer second image, detect pits on the outer surface of the outer film of the battery cell 200 more accurately, thus further improving the precision of detection of the battery cell appearance defect detection apparatus 100.

In some embodiments, the battery cell appearance defect detection apparatus 100 is adapted to perform appearance detection of the battery cell 200 that is moving, and it can also be understood that the battery cell appearance defect detection apparatus 100 can detect appearance defects of the battery cell 200 during the movement of the battery cell 200. Here, the battery cell appearance defect detection apparatus 100 can be disposed on the detection device, and when the battery cell 200 moves on the detection device and the battery cell 200 flows past the battery cell appearance defect detection apparatus 100, the battery cell appearance defect detection apparatus 100 can complete the detection of appearance defects of the battery cell 200 during the movement of the battery cell 200, thus enhancing the speed of inspection, which can improve the efficiency of detection of the battery cell 200.

In some embodiments, as shown in Fig. 3, a first light region 14 on the detection surface 201 irradiated by the first light 13 is parallel to a second light region 15 on the detection surface 201 irradiated by the second light 23. By arranging the first light region 14 on the detection surface 201 irradiated by the first light 13 to be parallel to the second light region 15 on the detection surface 201 irradiated by the second light 23, it is possible to avoid intersection of the first light region 14 on the detection surface 201 irradiated by the first light 13 with the second light region 15 on the detection surface 201 irradiated by the second light 23, and to prevent the second light region 15 on the detection surface 201 irradiated by the second light 23 from interfering with the first image collector 11, thus ensuring that the first image collector 11 collects a clear first image; and also to prevent the first light region 14 on the detection surface 201 irradiated by the first light 13 from interfering with the second image collector 21, thus ensuring that the second image collector 21 collects a clear second image, which can ensure the respective detection performance of the first detection assembly 10 and the second detection assembly 20, thereby improving the detection accuracy of the battery cell appearance defect detection apparatus 100.

In some embodiments, as shown in Fig. 3, along the direction of extension of the first light region 14 on the detection surface 201 irradiated by the first light 13, the width of the detection surface 201 is L1, and the length of the first light region 14 on the detection surface 201 irradiated by the first light 13 is L2, which satisfy the relational expression: L1 ≤ L2. When the battery cell 200 flows past the battery cell appearance defect detection apparatus 100, it can also be understood that, during the movement of the battery cell 200, by setting L1 ≤ L2, it can be ensured that the first light 13 can scan the entire detection surface 201 and avoid the occurrence of missed detection of a certain region of the detection surface 201, thus ensuring that the first image collector 11 collects the image information of the entire detection surface 201.

In some embodiments, as shown in Fig. 3, along the direction of extension of the second light region 15 on the detection surface 201 irradiated by the second light 23, the width of the detection surface 201 is L3, and the length of the second light region 15 on the detection surface 201 irradiated by the second light 23 is L4, which satisfy the relational expression: L3 ≤ L4. When the battery cell 200 flows past the battery cell appearance defect detection apparatus 100, it can also be understood that, during the movement of the battery cell 200, by setting L3 ≤ L4, it can be ensured that the second light 23 can scan the entire detection surface 201 and avoid the occurrence of missed detection of a certain region of the detection surface 201, thus ensuring that the second image collector 21 collects the image information of the entire detection surface 201.

In some embodiments, the first image collector 11 and/or the second image collector 21 are/is constructed as a line scan camera, that is, the first image collector 11 or the second image collector 21 is constructed as a line scan camera, or both the first image collector 11 and the second image collector 21 are constructed as line scan cameras, for example, both the first image collector 11 and the second image collector 21 are constructed as line scan cameras. The gray scale value of an image generated through collection by a line scan camera is 80-100. For example, the gray scale value of the image generated through collection by the line scan camera is 80, 90, 100, and other values. By setting the gray scale value of the image generated through collection by the line scan camera to be in 80-100, the contrasts of the first image and the second image can be made appropriate, so that the characteristic defects inside and outside of the film of the film-clad battery cell 200 are obvious, and thus after the control assembly receives the first image and the second image, it can accurately detect appearance defects of the battery cell 200, thus improving the product qualification rate.

In some embodiments, the battery cell appearance defect detection apparatus 100 further comprises: an angle detection apparatus for detecting an included angle between the first light 13 and the detection surface 201 and an included angle between the second light 23 and the detection surface 201. Here, after the battery cell appearance defect detection apparatus 100 is assembled, the included angle between the first light 13 and the detection surface 201 is detected by the angle detection apparatus, and then it can be determined whether the angle range of the included angle between the first light 13 and the detection surface 201 is within the angle range of the first included angle α, and when the included angle between the first light 13 and the detection surface 201 is not within the angle range of the first included angle α, the first light source 12 is adjusted so that the included angle between the first light 13 emitted by the first light source 12 and the detection surface 201 is within the angle range of the first included angle α; and the included angle between the second light 23 and the detection surface 201 is detected by the angle detection apparatus, it can then be determined whether the angle range of the included angle between the second light 23 and the detection surface 201 is within the angle range of the second included angle β, and when the included angle between the second light 23 and the detection surface 201 is not within the angle range of the second included angle β, the second light source 22 is adjusted so that the included angle between the second light 23 emitted by the second light source 22 and the detection surface 201 is within the angle range of the second included angle β. In this way, by providing the angle detection apparatus, the included angle between the first light 13 and the detection surface 201 and the included angle between the second light 23 and the detection surface 201 can be detected, thus facilitating the determination of whether the second included angle β is less than the first included angle α. Moreover, when the included angle between the first light 13 and the detection surface 201 and the included angle between the second light 23 and the detection surface 201 are not within an appropriate range, this can be accurately detected by the angle detection apparatus, thus facilitating timely adjustment of the first light source 12 and the second light source 22.

Further, the angle detection apparatus can be communicatively connected to the control assembly, and the angle detection apparatus can transmit the detected angle information to the control assembly, and according to the received angle information, the control assembly determines whether the angle range of the included angle between the first light 13 and the detection surface 201 is within the angle range of the first included angle α, and determines whether the angle range of the included angle between the second light 23 and the detection surface 201 is within the angle range of the second included angle β. It should be noted that the specific construction of the angle detection apparatus is not specifically limited, as long as the angle detection apparatus can detect the included angle between the first light 13 and the detection surface 201 and the included angle between the second light 23 and the detection surface 201.

In some embodiments, the battery cell appearance defect detection apparatus 100 may further include: an alarm apparatus, wherein the alarm apparatus is communicatively connected to the control assembly, and the alarm apparatus may be an audible alarm and/or a light alarm, and the present application is illustrated taking the alarm apparatus being an audible alarm as an example. When the angle detection apparatus detects that the included angle between the first light 13 and the detection surface 201 and the included angle between the second light 23 and the detection surface 201 are not within the appropriate range, the control assembly controls the alarm apparatus to issue an alarm to alert the operator that the included angle between the first light 13 and the detection surface 201 and the included angle between the second light 23 and the detection surface 201 are not within the appropriate range.

According to some embodiments of the present application, the present application also provides a detection device comprising the battery cell appearance defect detection apparatus 100 of the above embodiments. Here, the detection device may have stations for detecting other parameters of the battery cell 200, and the battery cell appearance defect detection apparatus 100 is located at one of the stations in the detection device.

In some embodiments, there are a plurality of battery cell appearance defect detection apparatuses 100, the plurality of battery cell appearance defect detection apparatuses 100 being used for correspondingly detecting a plurality of detection surfaces 201 of the battery cell 200. In particular, when detecting the appearance defects of the battery cell 200, each detection surface 201 corresponds at least to one battery cell appearance defect detection apparatus 100, and the battery cell appearance defect detection apparatus 100 is used for detecting the corresponding detection surface 201. With such settings, it is possible to achieve the effect of detection of a plurality of detection surfaces 201 by a plurality of battery cell appearance defect detection apparatuses 100, which can improve the efficiency of detecting appearance defects of the battery cell 200.

The battery cell appearance defect detection apparatus 100 of the present application is described below with reference to Figs. 1 and 2.

As shown in Fig. 2, when the upper surface of the battery cell 200 needs to be detected, the upper surface of the battery cell 200 is the detection surface 201, and the battery cell appearance defect detection apparatus 100 is disposed above the battery cell 200. The first image collector 11, the first light source 12, the second image collector 21, and the second light source 22 are turned on for operation, wherein the first light source 12 emits first light 13 toward the detection surface 201 of the battery cell 200, and the first light 13 forms a first included angle α with the detection surface 201, and the first image collector 11 performs image scanning to collect the first image of the position of the battery cell 200 irradiated by the first light 13. The first image collector 11 transmits the collected first image to the control assembly, and a pre-tuned AI algorithm in the control assembly detects whether there are foreign matter particles and air bubbles on the inner side of the film of the film-clad battery cell 200, and the AI algorithm distinguishes between the air bubbles on the inner side of the film and the foreign matter on the inner side of the film based on different forms.

In addition, the second light source 22 emits second light 23 toward the detection surface 201 of the battery cell 200, and the second light 23 forms a second included angle β with the detection surface 201. At the end of the scanning, the first image collector 11 transmits the collected second image to the control assembly, and then the pre-tuned AI algorithm in the control assembly detects whether there are pits on the surface of the battery cell 200.

It should be noted that in case of no conflicts, the embodiments in the present application and features in the embodiments may be combined with each other.

In the description of this specification, descriptions referring to terms "one embodiment", "some embodiments", "exemplary embodiments", "examples", "specific example", or "some examples" mean that specific features, structures, materials or characteristics described in connection with this embodiment or example are included in at least one embodiment or example of the present application. In this specification, the schematic expressions of the above terms does not necessarily refer to the same embodiments or examples. Moreover, the specific features, structures, materials, or characteristics described may be combined in any one or more embodiments or examples in a suitable manner.

Although embodiments of the present application have been illustrated and described, it can be understood by those of ordinary skill in the art that a variety of variations, modifications, replacements and variants of these embodiments can be made without departing from the principles and purposes of the present application, and the scope of the present application is limited by the claims.

## Claims

1. A film-clad battery cell appearance defect detection apparatus (100), comprising
a first detection assembly (10) comprising a first image collector (11) and a first light source (12), wherein the first light source (12) is used to emit first light (13) toward a detection surface (201) of a battery cell (200), the first light (13) being adapted to pass through an outer film of the battery cell (200), and the first light (13) forming a first included angle (α) with the detection surface (201), and the first image collector (11) is used to collect a first image of the position on the battery cell (200) irradiated by the first light (13);
a second detection assembly (20) comprising a second image collector (21) and a second light source (22), wherein the second light source (22) is used to emit second light (23) toward the detection surface (201), the second light (23) forming a second included angle (β) with the detection surface (201), and the second image collector (21) is used to collect a second image of the position on the battery cell (200) irradiated by the second light (23), with the second included angle (β) being less than the first included angle (α); and
a control assembly connected respectively with the first image collector (11) and the second image collector (21), the control assembly being constructed to detect appearance defects of the battery cell (200) according to the first image and the second image, wherein the appearance defects comprise defects between the outer film and a shell of the battery cell (200) and defects on the outer film;
wherein the first light (13) and the second light (23) are both infrared scanning light; and wherein the wavelength of the first light (13) and the wavelength of the second light (23) are both wavelengths which satisfy the relational expression: 800 nm ≤ λ ≤ 900 nm.

2. The battery cell appearance defect detection apparatus (100) according to claim 1, wherein the first included angle (α) is α, which satisfies the relational expression: 60° ≤ α ≤ 80°.

3. The battery cell appearance defect detection apparatus (100) according to claim 1, wherein the second included angle (β) is β, and 5° ≤ β ≤ 15°.

4. The battery cell appearance defect detection apparatus (100) according to claim 1, wherein the first image collector (11) is constructed as a line scan camera, and the position on the detection surface (201) irradiated by the scanning line of the first image collector (11) coincides with the position on the detection surface (201) irradiated by the first light (13).

5. The battery cell appearance defect detection apparatus (100) according to claim 1, wherein the second image collector (21) is constructed as a line scan camera, and the position on the detection surface (201) irradiated by the scanning line of the second image collector (21) coincides with the position on the detection surface (201) irradiated by the second light (23).

6. The battery cell appearance defect detection apparatus (100) according to claim 1, wherein the first detection assembly (10) and the second detection assembly (20) are located on the same side of the detection surface (201); optionally a first light region (14) on the detection surface (201) irradiated by the first light (13) is misaligned with a second light region (15) on the detection surface (201) irradiated by the second light (23); optionally along a direction perpendicular to the detection surface (201), the spacing distance between a light source light-emitting surface of the first light source (12) and the detection surface (201) is D1, and the spacing distance between a light source light-emitting surface of the second light source (22) and the detection surface (201) is D2, which satisfy the relational expression: D2 < D1; and optionally the first light source (12) and the second light source (22) respectively emit light from different directions to the detection surface (201).

7. The battery cell appearance defect detection apparatus (100) according to any one of claims 1-6, wherein, along a direction perpendicular to the detection surface (201), the spacing distance between a light source light-emitting surface of the first light source (12) and the detection surface (201) is D1, which satisfies the relational expression: 0mm < D1 < 150mm; and/or
along a direction perpendicular to the detection surface (201), the spacing distance between a light source light-emitting surface of the second light source (22) and the detection surface (201) is D2, which satisfies the relational expression: 0mm < D2 < 150mm; optionally 40mm ≤ D1 ≤ 80mm; and optionally 10mm ≤ D2 ≤ 50mm.

8. The battery cell appearance defect detection apparatus (100) according to any one of claims 1-6, wherein the battery cell appearance defect detection apparatus (100) is adapted to perform an appearance detection of the battery cell (200) that is moving.

9. The battery cell appearance defect detection apparatus (100) according to any one of claims 1-6, wherein a first light region (14) on the detection surface (201) irradiated by the first light (13) is parallel to a second light region (15) on the detection surface (201) irradiated by the second light (23).

10. The battery cell appearance defect detection apparatus (100) according to any one of claims 1-6, wherein, along the direction of extension of a first light region (14) on the detection surface (201) irradiated by the first light (13), the width of the detection surface (201) is L1 and the length of the first light region (14) is L2, which satisfy the relational expression: L1 ≤ L2.

11. The battery cell appearance defect detection apparatus (100) according to any one of claims 1-6, wherein, along the direction of extension of a second light region (15) on the detection surface (201) irradiated by the second light (23), the width of the detection surface (201) is L3 and the length of the second light region (15) is L4, which satisfy the relational expression: L3 ≤ L4.

12. The battery cell appearance defect detection apparatus (100) according to any one of claims 1-6, wherein the first image collector (11) and/or the second image collector (21) are/is constructed as a line scan camera, and the gray scale value of an image generated through collection by the line scan camera is 80-100; optionally the battery cell appearance defect detection apparatus (100) further comprises: an angle detection apparatus for detecting an included angle between the first light (13) and the detection surface (201) and an included angle between the second light (23) and the detection surface (201); and optionally the control assembly is communicatively connected to both the first light source (12) and the second light source (22), and the control assembly is used to control the turning on or off of the first light source (12), the second light source (22), the first image collector (11), and the second image collector (21).

13. A detection device, comprising the battery cell appearance defect detection apparatus (100) according to any one of claims 1-12.

14. The detection device according to claim 13, wherein there are a plurality of said battery cell appearance defect detection apparatuses (100), the plurality of said battery cell appearance defect detection apparatuses (100) being used for correspondingly detecting a plurality of said detection surfaces (201) of the battery cell (200).

## Patentansprüche

1. Vorrichtung zur Erkennung von Erscheinungsfehlern einer Filmmantel-Batteriezelle (100), umfassend:
eine erste Erkennungsanordnung (10), umfassend einen ersten Bildsammler (11) und eine erste Lichtquelle (12), wobei die erste Lichtquelle (12) verwendet wird, um das erste Licht (13) in Richtung einer Erkennungsfläche (201) einer Batteriezelle (200) zu emittieren, wobei das erste Licht (13) so angepasst ist, dass es durch eine äußere Folie der Batteriezelle (200) dringen kann, und das erste Licht (13) einen ersten beinhalteten Winkel (α) mit der Erkennungsfläche (201) ausbildet, und der erste Bildsammler (11) verwendet wird, um ein erstes Bild der Position auf der Batteriezelle (200) zu sammeln, die von dem ersten Licht (13) bestrahlt wird;
eine zweite Erkennungsanordnung (20), umfassend einen zweiten Bildsammler (21) und eine zweite Lichtquelle (22), wobei die zweite Lichtquelle (22) verwendet wird, um das zweite Licht (23) in Richtung der Erkennungsfläche (201) zu emittieren, wobei das zweite Licht (23) einen zweiten beinhalteten Winkel (β) mit der Erkennungsfläche (201) ausbildet, und der zweite Bildsammler (21) verwendet wird, um ein zweites Bild der Position auf der Batteriezelle (200) zu sammeln, die von dem zweiten Licht (23) bestrahlt wird, wobei der zweite beinhaltete Winkel (β) kleiner als der erste beinhaltete Winkel (α) ist; und
eine Steueranordnung, die jeweils mit dem ersten Bildsammler (11) und dem zweiten Bildsammler (21) verbunden ist, wobei die Steueranordnung so aufgebaut ist, dass sie Erscheinungsfehler der Batteriezelle (200) entsprechend dem ersten Bild und dem zweiten Bild erkennt, wobei die Erscheinungsfehler Fehler zwischen der äußeren Folie und einer Hülle der Batteriezelle (200) und Fehler auf der äußeren Folie umfassen;
wobei das erste Licht (13) und das zweite Licht (23) jeweils infrarotes Abtastlicht sind; und
wobei die Wellenlänge des ersten Lichts (13) und die Wellenlänge des zweiten Lichts (23) beide Wellenlängen λ sind, die den folgenden relationalen Ausdruck erfüllen: 800 nm ≤ λ ≤ 900 nm.

2. Vorrichtung zur Erkennung von Erscheinungsfehlern einer Batteriezelle (100) nach Anspruch 1, wobei der erste beinhaltete Winkel (α) α ist, der den folgenden relationalen Ausdruck erfüllt: 60° ≤ α ≤ 80°.

3. Vorrichtung zur Erkennung von Erscheinungsfehlern einer Batteriezelle (100) nach Anspruch 1, wobei der zweite beinhaltete Winkel (β) β und 5° ≤ β ≤ 15° ist.

4. Vorrichtung zur Erkennung von Erscheinungsfehlern einer Batteriezelle (100) nach Anspruch 1, wobei der erste Bildsammler (11) als Zeilenkamera aufgebaut ist, und die Position auf der Erkennungsfläche (201), die von der Abtastzeile des ersten Bildsammlers (11) bestrahlt wird, mit der Position auf der Erkennungsfläche (201) übereinstimmt, die von dem ersten Licht (13) bestrahlt wird.

5. Vorrichtung zur Erkennung von Erscheinungsfehlern einer Batteriezelle (100) nach Anspruch 1, wobei der zweite Bildsammler (21) als Zeilenkamera aufgebaut ist, und die Position auf der Erkennungsfläche (201), die von der Abtastzeile des zweiten Bildsammlers (21) bestrahlt wird, mit der Position auf der Erkennungsfläche (201) übereinstimmt, die von dem zweiten Licht (23) bestrahlt wird.

6. Vorrichtung zur Erkennung von Erscheinungsfehlern einer Batteriezelle (100) nach Anspruch 1, wobei die erste Erkennungsanordnung (10) und die zweite Erkennungsanordnung (20) auf der gleichen Seite der Erkennungsfläche (201) angeordnet sind; optional ein erster Lichtbereich (14) auf der Erkennungsfläche (201), der von dem ersten Licht (13) bestrahlt wird, zu einem zweiten Lichtbereich (15) auf der Erkennungsfläche (201), der von dem zweiten Licht (23) bestrahlt wird, versetzt angeordnet ist; optional entlang einer Richtung senkrecht zu der Erkennungsfläche (201) der Zwischenabstand zwischen einer Lichtquellen-Lichtaustrittsfläche der ersten Lichtquelle (12) und der Erkennungsfläche (201) D1 ist und der Zwischenabstand zwischen einer Lichtquellen-Lichtaustrittsfläche der zweiten Lichtquelle (22) und der Erkennungsfläche (201) D2 ist, die den folgenden relationalen Ausdruck erfüllen: D2 < D1; und optional die erste Lichtquelle (12) und die zweite Lichtquelle (22) jeweils Licht aus verschiedenen Richtungen auf die Erkennungsfläche (201) strahlen.

7. Vorrichtung zur Erkennung von Erscheinungsfehlern einer Batteriezelle (100) nach einem der Ansprüche 1-6, wobei entlang einer Richtung senkrecht zu der Erkennungsfläche (201) der Zwischenabstand zwischen einer Lichtquellen-Lichtaustrittsfläche der ersten Lichtquelle (12) und der Erkennungsfläche (201) D1 ist, der den folgenden relationaler Ausdruck erfüllt: 0mm < D1 < 150mm; und/oder
entlang einer Richtung senkrecht zu der Erkennungsfläche (201) der Zwischenabstand zwischen einer Lichtquellen-Lichtaustrittsfläche der zweiten Lichtquelle (22) und der Erkennungsfläche (201) D2 ist, der den folgenden relationalen Ausdruck erfüllt: 0mm < D2 < 150mm; optional 40mm ≤ D1 ≤ 80mm; und optional 10mm ≤ D2 ≤ 50mm.

8. Vorrichtung zur Erkennung von Erscheinungsfehlern einer Batteriezelle (100) nach einem der Ansprüche 1-6, wobei die Vorrichtung zur Erkennung von Erscheinungsfehlern einer Batteriezelle (100) so angepasst ist, dass sie eine Erscheinungserkennung der Batteriezelle (200) durchführt, die sich bewegt.

9. Vorrichtung zur Erkennung von Erscheinungsfehlern einer Batteriezelle (100) nach einem der Ansprüche 1-6, wobei ein erster Lichtbereich (14) auf der Erkennungsfläche (201), der von dem ersten Licht (13) bestrahlt wird, parallel zu einem zweiten Lichtbereich (15) auf der Erkennungsfläche (201) liegt, der von dem zweiten Licht (23) bestrahlt wird.

10. Vorrichtung zur Erkennung von Erscheinungsfehlern einer Batteriezelle (100) nach einem der Ansprüche 1-6, wobei entlang der Erstreckungsrichtung eines ersten Lichtbereichs (14) auf der Erkennungsfläche (201), die von dem ersten Licht (13) bestrahlt wird, die Breite der Erkennungsfläche (201) L1 und die Länge des ersten Lichtbereichs (14) L2 beträgt, die den folgenden relationalen Ausdruck erfüllen: L1 ≤ L2.

11. Vorrichtung zur Erkennung von Erscheinungsfehlern einer Batteriezelle (100) nach einem der Ansprüche 1-6, wobei entlang der Erstreckungsrichtung eines zweiten Lichtbereichs (15) auf der Erkennungsfläche (201), die von dem zweiten Licht (23) bestrahlt wird, die Breite der Erkennungsfläche (201) L3 und die Länge des zweiten Lichtbereichs (15) L4 beträgt, die den folgenden relationalen Ausdruck erfüllen: L3 ≤ L4.

12. Vorrichtung zur Erkennung von Erscheinungsfehlern einer Batteriezelle (100) nach einem der Ansprüche 1-6, wobei der erste Bildsammler (11) und/oder der zweite Bildsammler (21) als Zeilenkamera aufgebaut ist/sind und der Graustufenwert eines Bildes, der durch die Kollektion durch die Zeilenkamera erzeugt wird, 80-100 beträgt; optional die Vorrichtung zur Erkennung von Erscheinungsfehlern einer Batteriezelle (100) ferner umfasst: eine Winkelerkennungsvorrichtung zum Erkennen eines beinhalteten Winkels zwischen dem ersten Licht (13) und der Erkennungsfläche (201) und eines beinhalteten Winkels zwischen dem zweiten Licht (23) und der Erkennungsfläche (201); und optional die Steueranordnung kommunikativ sowohl mit der ersten Lichtquelle (12) als auch mit der zweiten Lichtquelle (22) verbunden ist, und die Steueranordnung verwendet wird, um das Ein- oder Ausschalten der ersten Lichtquelle (12), der zweiten Lichtquelle (22), des ersten Bildsammlers (11) und des zweiten Bildsammlers (21) zu steuern.

13. Erkennungsvorrichtung, umfassend die Vorrichtung zur Erkennung von Erscheinungsfehlern einer Batteriezelle (100) nach einem der Ansprüche 1-12.

14. Erkennungsvorrichtung nach Anspruch 13, wobei es eine Vielzahl von Vorrichtungen zur Erkennung von Erscheinungsfehlern einer Batteriezelle (100) gibt, wobei die Vielzahl von Vorrichtungen zur Erkennung von Erscheinungsfehlern einer Batteriezelle (100) zum entsprechenden Erkennen einer Vielzahl der Erkennungsflächen (201) der Batteriezelle (200) verwendet wird.

## Revendications

1. Appareil de détection de défaut d'apparence d'élément de batterie de batterie revêtu d'un film (100), comprenant :
un premier ensemble de détection (10) comprenant un premier collecteur d'image (11) et une première source de lumière (12), dans lequel la première source de lumière (12) est utilisée pour émettre une première lumière (13) vers une surface de détection (201) d'un élément de batterie (200), la première lumière (13) étant adaptée pour passer à travers un film extérieur de l'élément de batterie (200), et la première lumière (13) formant un premier angle inclus (α) avec la surface de détection (201), et le premier collecteur d'image (11) est utilisé pour collecter une première image de la position sur l'élément de batterie (200) irradiée par la première lumière (13) ;
un deuxième ensemble de détection (20) comprenant un deuxième collecteur d'image (21) et une deuxième source de lumière (22), dans lequel la deuxième source de lumière (22) est utilisée pour émettre une deuxième lumière (23) vers la surface de détection (201), la deuxième lumière (23) formant un deuxième angle inclus (β) avec la surface de détection (201), et le deuxième collecteur d'image (21) est utilisé pour collecter une deuxième image de la position sur l'élément de batterie (200) irradiée par la deuxième lumière (23), le deuxième angle inclus (β) étant inférieur au premier angle inclus (α) ; et
un ensemble de commande relié respectivement au premier collecteur d'image (11) et au deuxième collecteur d'image (21), l'ensemble de commande étant élaboré pour détecter des défauts d'aspect de l'élément de batterie (200) selon la première image et la deuxième image, dans lequel les défauts d'apparence comprennent des défauts entre le film extérieur et une coque de l'élément de batterie (200) et des défauts sur le film extérieur ;
dans lequel la première lumière (13) et la deuxième lumière (23) sont toutes deux une lumière de balayage infrarouge ; et
dans lequel la longueur d'onde de la première lumière (13) et/ou la longueur d'onde de la deuxième lumière (23) sont toutes deux des longueurs d'onde λ, qui satisfont à l'expression relationnelle : 800 nm ≤ λ ≤ 900 nm.

2. Appareil de détection de défaut d'apparence d'élément de batterie (100) selon la revendication 1, dans lequel le premier angle inclus (α) est α, qui satisfait à l'expression relationnelle : 60° ≤ α ≤ 80°.

3. Appareil de détection de défaut d'apparence d'élément de batterie (100) selon la revendication 1, dans lequel le deuxième angle inclus (β) est β, et 5° ≤ β ≤ 15°.

4. Appareil de détection de défaut d'apparence d'élément de batterie (100) selon la revendication 1, dans lequel le premier collecteur d'image (11) est élaboré comme une caméra à balayage linéaire, et la position sur la surface de détection (201) irradiée par la ligne de balayage du premier collecteur d'image (11) coïncide avec la position sur la surface de détection (201) irradiée par la première lumière (13).

5. Appareil de détection de défaut d'apparence d'élément de batterie (100) selon la revendication 1, dans lequel le deuxième collecteur d'image (21) est élaboré comme une caméra à balayage linéaire, et la position sur la surface de détection (201) irradiée par la ligne de balayage du deuxième collecteur d'image (21) coïncide avec la position sur la surface de détection (201) irradiée par la deuxième lumière (23).

6. Appareil de détection de défaut d'apparence d'élément de batterie (100) selon la revendication 1, dans lequel le premier ensemble de détection (10) et le deuxième ensemble de détection (20) sont situés sur le même côté de la surface de détection (201) ; en option, une première région de lumière (14) sur la surface de détection (201) irradiée par la première lumière (13) est désalignée avec une deuxième région de lumière (15) sur la surface de détection (201) irradiée par la deuxième lumière (23) ; en option, le long d'une direction perpendiculaire à la surface de détection (201), la distance d'espacement entre une surface d'émission de lumière de source de lumière de la première source de lumière (12) et la surface de détection (201) est D1, et la distance d'espacement entre une surface d'émission de lumière de source de lumière de la deuxième source de lumière (22) et la surface de détection (201) est D2, qui satisfont à l'expression relationnelle : D2 < D1 ; et en option, la première source de lumière (12) et la deuxième source de lumière (22) émettent respectivement de la lumière depuis différentes directions vers la surface de détection (201).

7. Appareil de détection de défaut d'apparence d'élément de batterie (100) selon l'une quelconque des revendications 1 à 6, dans lequel, le long d'une direction perpendiculaire à la surface de détection (201), la distance d'espacement entre une surface d'émission de lumière de source de lumière de la première source de lumière (12) et la surface de détection (201) est D1, qui satisfait à l'expression relationnelle : 0 mm < D1 < 150 mm ; et/ou
dans une direction perpendiculaire à la surface de détection (201), la distance d'espacement entre une surface d'émission de lumière de source de lumière de la deuxième source de lumière (22) et la surface de détection (201) est D2, qui satisfait à l'expression relationnelle : 0 mm < D2 < 150 mm ; en option, 40 mm ≤ D1 ≤ 80 mm ; et en option 10 mm ≤ D2 ≤ 50 mm.

8. Appareil de détection de défaut d'apparence d'élément de batterie (100) selon l'une quelconque des revendications 1 à 6, dans lequel l'appareil de détection de défaut d'apparence d'élément de batterie (100) est adapté pour effectuer une détection d'apparence de l'élément de batterie (200) qui se déplace.

9. Appareil de détection de défaut d'apparence d'élément de batterie (100) selon l'une quelconque des revendications 1 à 6, dans lequel une première région de lumière (14) sur la surface de détection (201) irradiée par la première lumière (13) est parallèle à une deuxième région de lumière (15) sur la surface de détection (201) irradiée par la deuxième lumière (23).

10. Appareil de détection de défaut d'apparence d'élément de batterie (100) selon l'une quelconque des revendications 1 à 6, dans lequel, le long de la direction d'extension d'une première région de lumière (14) sur la surface de détection (201) irradiée par la première lumière (13), la largeur de la surface de détection (201) est L1 et la longueur de la première région de lumière (14) est L2, qui satisfont à l'expression relationnelle : L1 ≤ L2.

11. Appareil de détection de défaut d'apparence d'élément de batterie (100) selon l'une quelconque des revendications 1 à 6, dans lequel, le long de la direction d'extension d'une deuxième région de lumière (15) sur la surface de détection (201) irradiée par la deuxième lumière (23), la largeur de la surface de détection (201) est L3 et la longueur de la deuxième région de lumière (15) est L4, qui satisfont à l'expression relationnelle : L3 ≤ L4.

12. Appareil de détection de défaut d'apparence d'élément de batterie (100) selon l'une quelconque des revendications 1 à 6, dans lequel le premier collecteur d'image (11) et/ou le deuxième collecteur d'image (21) sont élaborés/est élaboré comme une caméra à balayage linéaire, et la valeur d'échelle de gris d'une image générée par collecte par la caméra à balayage linéaire est de 80 - 100 ; en option, l'appareil de détection de défaut d'apparence d'élément de batterie (100) comprend en outre : un appareil de détection d'angle pour détecter un angle inclus entre la première lumière (13) et la surface de détection (201) et un angle inclus entre la deuxième lumière (23) et la surface de détection (201) ; et en option, l'ensemble de commande est relié en communication à la fois à la première source de lumière (12) et à la deuxième source de lumière (22), et l'ensemble de commande est utilisé pour commander l'allumage ou l'extinction de la première source de lumière (12), de la deuxième source de lumière (22), du premier collecteur d'image (11), et du deuxième collecteur d'image (21).

13. Dispositif de détection, comprenant l'appareil de détection de défaut d'apparence d'élément de batterie (100) selon l'une quelconque des revendications 1 à 12.

14. Dispositif de détection selon la revendication 13, dans lequel il y a une pluralité desdits appareils de détection de défaut d'apparence d'élément de batterie (100), la pluralité desdits appareils de détection de défaut d'apparence d'élément de batterie (100) étant utilisée pour détecter de manière correspondante une pluralité desdites surfaces de détection (201) de l'élément de batterie (200).
